# EUROPEAN PATENT APPLICATION

(11) **EP 4 737 998 A1**
(43) Date of publication of application: **06.05.2026**
(21) Application number: 24940927.7
(22) Date of filing: 15.08.2024
(51) Int. Cl.: G02F 1/1675

(54) **PLASMA DISPLAY MODULE HAVING EMBEDDED STRUCTURE, AND PLASMA DISPLAY SCREEN**

(30) Priority: 09.08.2024 CN 202411089330
(71) Applicant: Wuxi Vision Peak Technology Co., Ltd., Wuxi, Jiangsu 214028 (CN)
(72) Inventor: BAO, Jin, Wuxi, Jiangsu 214028 (CN); CHEN, Shan, Wuxi, Jiangsu 214028 (CN); TANG, Zhenxing, Wuxi, Jiangsu 214028 (CN); XU, Jun, Wuxi, Jiangsu 214028 (CN)
(74) Representative: Bayramoglu et al.
(86) International application number: PCT/CN2024/112235
(87) International publication number: WO 2026/031263

(57) **Abstract**

The present disclosure relates to a plasma display module with an embedded structure, including a first substrate and a second substrate disposed opposite to the first substrate. A leveling layer is disposed on a surface of the first substrate facing the second substrate, the leveling layer is etched with a first groove and a second groove, and conductive medium layers are respectively disposed on surfaces that are of the first groove, the second groove, and the leveling layer and face the second substrate. The second substrate is provided with a first support structure and a second support structure that extend toward the first substrate. An end of the first support structure away from the second substrate is embedded in the first groove, an end of the second support structure away from the second substrate is embedded in the second groove, and the second support structure surrounds a pixel electrode region. The present disclosure can provide a defined range for sealing glue, prevent uneven squeezing of display paste and the glue, avoid edge collapse of the module and a display panel, and improve flatness. In this way, the first substrate and the second substrate are connected into an integrated structure, thereby enhancing pressure resistance and reducing deformation caused by a temperature change.

## Description

### TECHNICAL FIELD

The present disclosure relates to the technical field of electronic display, and in particular, to a plasma display module with an embedded structure and a plasma display panel.

### BACKGROUND TECHNOLOGY

The structure of the existing plasma display panel mainly consists of a glass substrate, a filter, an indium tin oxide (ITO) layer, and a plasma barrier rib from top to bottom. A gap is reserved between the plasma barrier rib and the ITO layer to form a plasma flow opening, and an upper cover plate and a lower cover plate are prone to deformation caused by an external force, so the display panel has poor pressure resistance. Therefore, how to increase overall structural strength of the display panel, reduce the deformation of the upper cover plate and the lower cover plate, and improve overall pressure resistance of the display panel has become an urgent technical problem to be solved by those skilled in the art.

Meanwhile, in the existing production process, during bonding of upper and lower glass, there is no support for an edge of the structure of the plasma display panel. Support beads are usually added to the edge bonding adhesive to ensure that the edge does not collapse. Nevertheless, since the support beads are not always precise, when pressure is applied during bonding, sagging is generated on the edge, resulting in an uneven force distribution across an entire surface, and an uneven display medium, ultimately leading to inconsistent displaying quality between the edges and the center.

### CONTENT OF THE INVENTION

The present disclosure provides a plasma display module with an embedded structure and a plasma display panel, which solve at least one of the technical problems mentioned in

### BACKGROUND.

A technical solution of the present disclosure is as follows: A plasma display module with an embedded structure includes a first substrate and a second substrate disposed opposite to the first substrate, where
a leveling layer is disposed on a surface of the first substrate facing the second substrate, the leveling layer is etched with a first groove and a second groove, and conductive medium layers are respectively disposed on surfaces that are of the first groove, the second groove, and the leveling layer and face the second substrate;
a pixel electrode region is disposed on a surface of the second substrate facing the first substrate;
the second substrate is provided with a first support structure that extends toward the first substrate, and an end of the first support structure away from the second substrate is embedded in the first groove; and
the second substrate is provided with a second support structure that extends toward the first substrate, an end of the second support structure away from the second substrate is embedded in the second groove, and the second support structure surrounds the pixel electrode region.

Further, a filter layer is disposed on the surface of the first substrate facing the second substrate, the leveling layer covers a surface of the filter layer facing the second substrate, and the filter layer includes a plurality of color filters disposed at intervals.

Further, a depth of the first groove is equal to a thickness of the leveling layer.

Further, a depth of the first groove is equal to a sum of a thickness of the leveling layer and a thickness of the filter layer.

Further, bottom widths of cross-sections of the first support structure and the second support structure are respectively greater than or equal to top widths of the cross-sections thereof.

Further, the second support structure includes a cofferdam or a plurality of support bars, and the plurality of support bars are arranged at intervals.

Further, when the second support structure is a cofferdam, the second support structure is provided with a vent hole.

Further, a viscous medium is filled between the first groove and the first support structure and between the second groove and the second support structure, where the viscous medium is configured to wrap tops of the first support structure and the second support structure, and after the viscous medium is cured, the first substrate and the second substrate are connected into an integrated structure.

Further, a plasma display cavity is formed between the first substrate and the second substrate, and the plasma display cavity is filled with plasma particles.

Another technical solution of the present disclosure is as follows: A plasma display panel with an embedded structure includes the plasma display module with an embedded structure according to any one of the above implementations.

Beneficial effects of the present disclosure: The present disclosure joins upper and lower substrates in a snap-fit manner by disposing a first groove and embedding an upper end of a first support structure into the first groove, so as to increase overall structural strength of a display panel. This can perfectly solve problems of pressure resistance and environmental testing. In addition, a second support structure is disposed at an edge of a module, which can effectively solve a problem of no support at the edge of the module and improve display consistency between edges of the module and a center of the module. The present disclosure disposes the second support structure outside a display region, and embeds an upper end of the second support structure into the first groove, thereby providing a defined range for frame glue, preventing uneven squeezing of display plasma material and the glue, avoiding edge collapse of the module and the display panel, and improving flatness.

### DESCRIPTION OF THE DRAWINGS

FIG. 1 is a schematic diagram of a sectional structure of the present disclosure;
FIG. 2 is a schematic diagram of a first groove according to Embodiment 1 of the present disclosure;
FIG. 3 is a schematic diagram of a first groove according to Embodiment 2 of the present disclosure;
FIG. 4 is a first schematic diagram of a first substrate according to the present disclosure;
FIG. 5 is a second schematic diagram of a first substrate according to the present disclosure;
FIG. 6 is a first schematic diagram of a second substrate according to the present disclosure;
FIG. 7 is a second schematic diagram of a second substrate according to the present disclosure;
FIG. 8 is a schematic top view of the present disclosure; and
FIG. 9 is a schematic diagram of a sectional structure of a filled viscous medium according to the present disclosure.

### SPECIFIC IMPLEMENTATIONS

To make persons skilled in the art better understand the solutions in the present disclosure, the following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

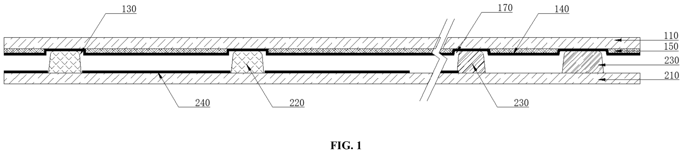

In a technical solution of the present disclosure, FIG. 1 is a schematic diagram of a sectional structure of a plasma display module with an embedded structure according to an embodiment of the present disclosure. This embodiment is a black-and-white module. If color display is required, a filter layer needs to be added. An embodiment for adding a color will be described below.

As shown in FIG. 1, the present disclosure specifically includes: first substrate 110 and second substrate 210 disposed opposite to the first substrate 110. The first substrate and the second substrate may be glass substrates, and the second substrate may be a thin film transistor (TFT) glass substrate.

Leveling layer 150 is disposed on a surface of the first substrate 110 facing the second substrate 210, the leveling layer 150 is etched with first groove 130 and second groove 170, and conductive medium layers 140 are respectively disposed on surfaces that are of the first groove 130 and the leveling layer 150 and face the second substrate 210. A material for the conductive medium layers may be Indium Tin Oxide (ITO).

Pixel electrode region 240 is disposed on a surface of the second substrate 210 facing the first substrate 110. The pixel electrode region 240 includes a plurality of pixel electrodes distributed in an array.

The second substrate 210 is provided with first support structure 220 that extends toward the first substrate 110, and an end of the first support structure 220 away from the second substrate 210 is embedded in the first groove 130.

The second substrate 210 is provided with second support structure 230 that extends toward the first substrate 110, and an end of the second support structure 230 away from the second substrate 210 is embedded in the second groove 170. The second support structure 230 surrounds the pixel electrode region 240, and is specifically disposed at a position outside a display region of the plasma display module.

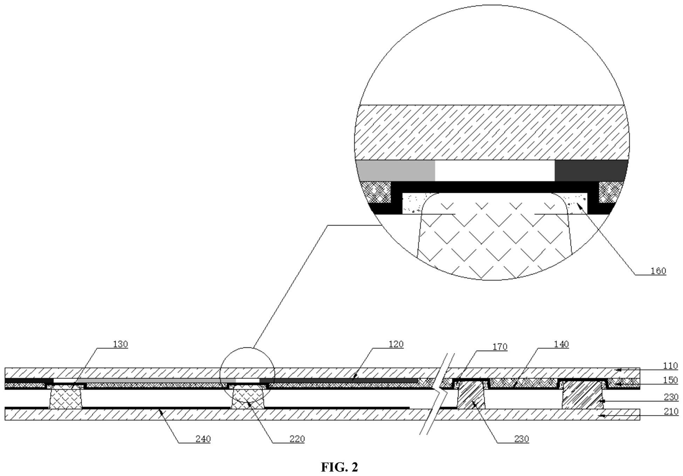

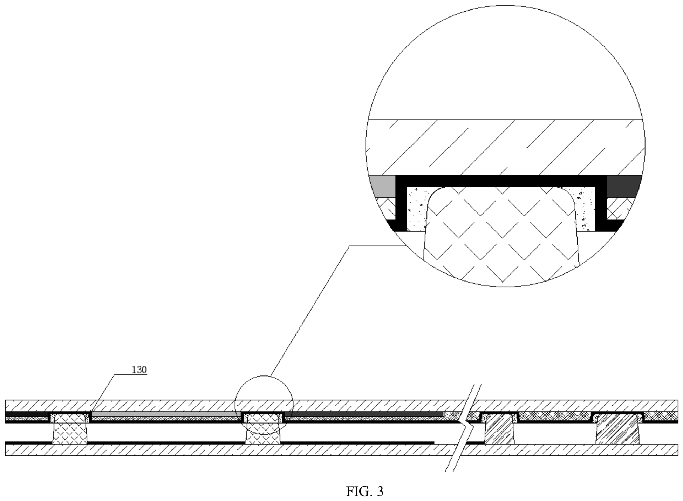

In an embodiment of the technical solution, as shown in FIG. 2 and FIG. 3, filter layer 120 is disposed on the surface of the first substrate 110 facing the second substrate 210, the leveling layer 150 covers a surface of the filter layer 120 facing the second substrate 210, and the filter layer 120 includes a plurality of color filters disposed at intervals. The filters include but are not limited to red, green, and blue (RGB) filters. This embodiment is an embodiment of a color module. After the filter layer is added, the module becomes a color display module.

As shown in FIG. 2, a depth of the first groove 130 is equal to a thickness of the leveling layer. There is a gap notch between adjacent color filters, and the first groove 130 covers the gap notch. The first groove 130 may be disposed at a corner or another position of the color filters.

As shown in FIG. 3, in this embodiment, when the first groove is etched, the etching stops only when the glass substrate is reached, thereby making the depth of the first groove 130 equal to the thickness of the leveling layer 150 plus a thickness of the filter layer. The first groove 130 is located between adjacent ones of the color filters, and may be disposed at the corner or other position of the any one of the color filters. The depth of the first groove 130 ranges from 0.01 µm to 10 µm, and preferably ranges from 1 µm to 6 µm.

In an embodiment of the technical solution, bottom widths of cross-sections of the first support structure 220 and the second support structure 230 are respectively greater than or equal to top widths of the cross-sections thereof. Preferably, the cross-sections of the first support structure 220 and the second support structure 230 both may be of a trapezoidal structure. It should be noted that the cross-sections of the first support structure and the second support structure may alternatively be of any other shape, which is not limited herein.

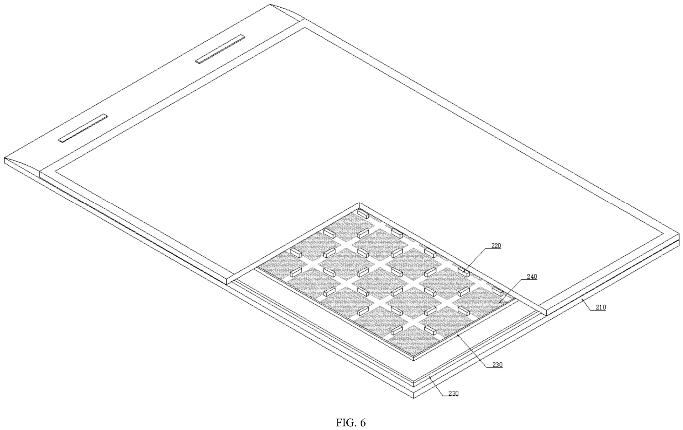

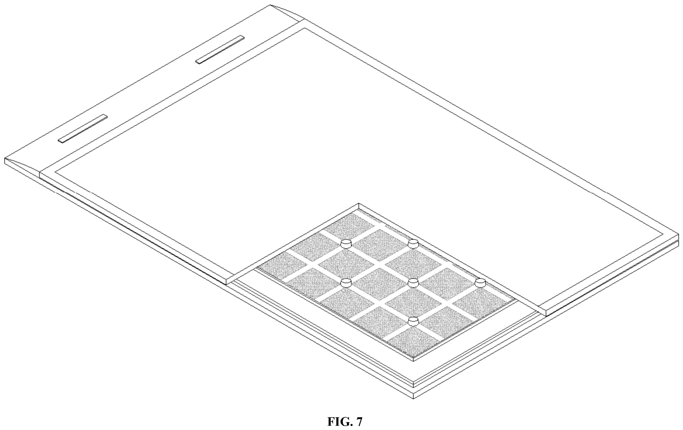

As shown in FIG. 6 and FIG. 7, the first support structure 220 may be a column structure, and the column may be a cuboid, a cylinder, or any other irregular structure. When the first support structure is the cuboid, its top is square. When the first support structure 220 is the cylinder, its top is circular. It should be noted that the first support structure may alternatively be of any other irregular shape, which is not limited herein.

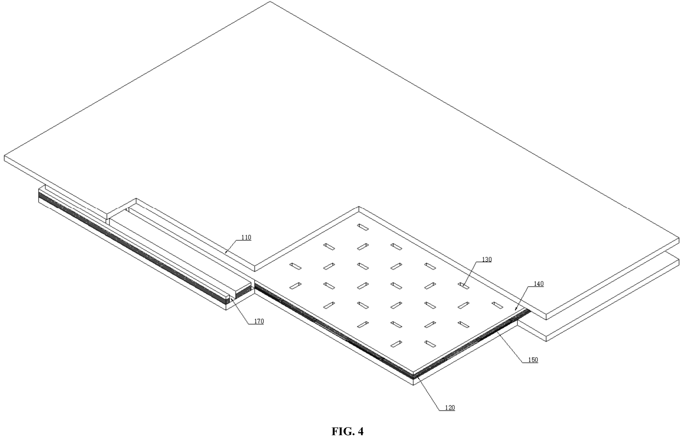

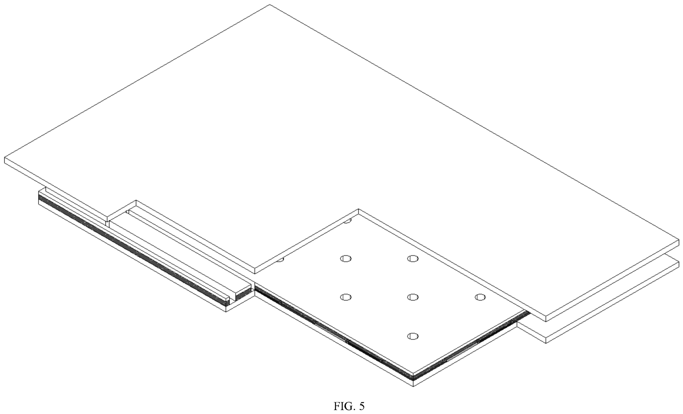

It should be noted that, as shown in FIG. 4 and FIG. 5, a shape of the first groove is adapted to a top shape of the first support structure 220, and specifically is of a square, circular, or any other irregular shape.

The first support structure 220 is embedded into the first groove 130 of the filter layer to provide support for the upper and lower substrates, thereby joining the upper and lower substrates in a snap-fit manner. This increases overall structural strength of a display panel, reduces deformation of upper and lower cover plates caused by an external force, and enhances overall pressure resistance. In an actual manufacturing process, the first support structure 220 may be first formed on the first substrate 110 and then connected to the second substrate 210, or may be first formed on the second substrate 210 and then connected to the first substrate 110. This is not limited herein.

A density range of the first support structure 220 is from one support structure per pixel electrode to one support structure per 10,000 pixel electrodes. Preferably, there is one support structure for 500 pixel electrodes or fewer. A height of the first support structure 220 ranges from 1 µm to 30 µm, and preferably ranges from 5 µm to 25 µm.

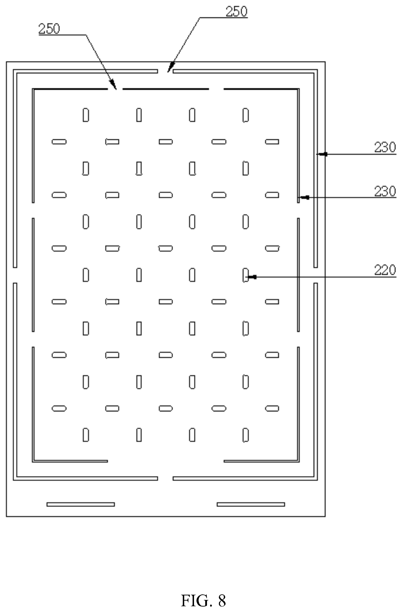

As shown in FIG. 8, the second support structure may be a cofferdam, or may be a structure formed by surrounding a plurality of support bars. The second support structure is disposed around the display region or an edge of the display module as a whole, such that the cross-section of the second support structure 230 can be of the trapezoidal structure.

When the second support structure 230 is the cofferdam, the second support structure 230 is provided with vent hole 250. The vent hole is used to discharge gas inside the module when the first substrate is connected to the second substrate.

The second support structure may be arranged in one or more circles. Therefore, a quantity of second support structures is not limited herein. FIG. 8 is a schematic diagram of two circles of second support structures. The second support structure can solve problems in an original production process, such as edge collapse and an uneven force distribution across an entire surface when pressure is applied during bonding because there is no support for the edge when upper and lower glass are bonded. By disposing the second support structure, a display medium can be made uniform, and display at the edge of the plasma display module is consistent with that in a center of the plasma display module.

It should be noted that the first support structure and the second support structure can be arranged irregularly, and their sectional shapes can also be in various forms, provided that they meet the above-mentioned combined structural characteristics. It can be understood that other arrangement modes and cross-sectional shapes should fall within the protection scope of the present patent.

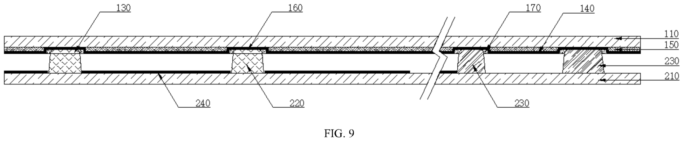

In an embodiment of the technical solution, as shown in FIG. 2, FIG. 3, and FIG. 9, viscous medium 160 is filled between the first groove 130 and the first support structure 220 and between the second groove 170 and the second support structure. The viscous medium 160 is configured to wrap the tops of the first support structure 220 and the second support structure 230, and after the viscous medium 160 is cured, the first substrate 110 and the second substrate 210 are connected into an integrated structure. The viscous medium 160 may be heat-curable adhesive, light-curable adhesive, hot-press-sensitive adhesive, or the like, and is preferably high-transparency curable adhesive. After the viscous medium firmly wraps and cures the first support structure and the second support structure, the first substrate and the second substrate form the integrated structure, which can reduce an impact of a temperature change on the plasma display module. This can perfectly solve problems of pressure resistance and environmental testing such as thermal shock for the module. When the viscous medium is disposed, filling medium points may correspond one-to-one with the support structures or may selectively correspond to the support structures.

In an embodiment of the present disclosure, a plasma display cavity is formed between the first substrate 110 and the second substrate 210, and the plasma display cavity is filled with plasma particles. The plasma particles include a white particle and a black particle. It should be understood that the plasma particles may further include a two-color, three-color, or multi-color pigment particle, which may be selected as required and is not limited herein.

Another technical solution of the present disclosure provides a plasma display panel with an embedded structure, including the plasma display module with an embedded structure according to any one of the embodiments described above. In a specific implementation of a display apparatus, the display apparatus may specifically be a microcapsule or microcup electronic paper display panel, a bistable reflective liquid crystal display (LCD) panel, an LCD panel, or the like. For effects of the display apparatus, reference may be specifically made to the effects of the plasma display module described above, and details are not described herein again.

## Claims

1. A plasma display module with an embedded structure, comprising a first substrate (110) and a second substrate (210) disposed opposite to the first substrate (110), wherein
a leveling layer (150) is disposed on a surface, facing the second substrate (210), of the first substrate (110), the leveling layer (150) is etched with a first groove (130) and a second groove (170), and conductive medium layers (140) are respectively disposed on surfaces, facing the second substrate (210), of the first groove (130), the second groove (170), and the leveling layer (150);
a pixel electrode region (240) is disposed on a surface, facing the first substrate (110), of the second substrate (210);
the second substrate (210) is provided with a first support structure (220) extending toward the first substrate (110), and an end, away from the second substrate (210), of the first support structure (220) is embedded in the first groove (130); and
the second substrate (210) is provided with a second support structure (230) extending toward the first substrate (110), an end, away from the second substrate (210), of the second support structure (230) is embedded in the second groove (170), and the second support structure (230) surrounds the pixel electrode region (240).

2. The plasma display module with an embedded structure according to claim 1, wherein a filter layer (120) is disposed on the surface, facing the second substrate (210), of the first substrate (110), the leveling layer (150) covers a surface, facing the second substrate (210), of the filter layer (120), and the filter layer (120) comprises a plurality of color filters disposed at intervals.

3. The plasma display module with an embedded structure according to claim 2, wherein a depth of the first groove (130) is equal to a thickness of the leveling layer (150).

4. The plasma display module with an embedded structure according to claim 2, wherein a depth of the first groove (130) is equal to a sum of a thickness of the leveling layer (150) and a thickness of the filter layer (120).

5. The plasma display module with an embedded structure according to claim 1, wherein bottom widths of cross-sections of the first support structure (220) and the second support structure (230) are respectively greater than or equal to top widths of the cross-sections thereof.

6. The plasma display module with an embedded structure according to claim 5, wherein the second support structure (230) comprises a cofferdam or a plurality of support bars, and the plurality of support bars are arranged at intervals.

7. The plasma display module with an embedded structure according to claim 1, wherein when the second support structure (230) is a cofferdam, the second support structure (230) is provided with a vent hole (250).

8. The plasma display module with an embedded structure according to any one of claims 1 to 7, wherein a viscous medium (160) is filled between the first groove (130) and the first support structure (220) and between the second groove (170) and the second support structure (230), wherein the viscous medium (160) is configured to wrap tops of the first support structure (220) and the second support structure (230), and after the viscous medium (160) is cured, the first substrate (110) and the second substrate (210) are connected into an integrated structure.

9. The plasma display module with an embedded structure according to claim 1, wherein a plasma display cavity is formed between the first substrate (110) and the second substrate (210), and the plasma display cavity is filled with plasma particles.

10. A plasma display panel with an embedded structure, comprising the plasma display module with an embedded structure according to any one of claims 1 to 9.
